# EUROPÄISCHE PATENTSCHRIFT

(11) **EP 4 280 182 B1**
(45) Veröffentlichungstag und Bekanntmachung des Hinweises auf die Patenterteilung: **01.10.2025**
(21) Anmeldenummer: 22174177.0
(22) Anmeldetag: 18.05.2022
(51) Int. Cl.: G07C 9/20, G06F 8/65, H04B 5/77, H04B 17/309, H04W 4/80

(54) **VERFAHREN ZUM ENTRIEGELN EINES ZUTRITTSSYSTEMS MITHILFE EINES MOBILEN ENDGERÄTS UND/ODER ZUR FEHLERERMITTLUNG, BETREFFEND EINE ENTRIEGELUNG EINES ZUTRITTSSYSTEMS; LESEEINRICHTUNG; SYSTEM; COMPUTERPROGRAMMPRODUKT**
METHOD FOR UNLOCKING AN ACCESS SYSTEM USING A MOBILE TERMINAL AND / OR FOR DETECTING FAULTS RELATING TO UNLOCKING OF AN ACCESS SYSTEM; READING DEVICE; SYSTEM; COMPUTER PROGRAM PRODUCT
PROCÉDÉ DE DÉVERROUILLAGE D'UN SYSTÈME D'ACCÈS À L'AIDE D'UN TERMINAL MOBILE ET/OU DE DÉTECTION D'ERREURS CONCERNANT UN DÉVERROUILLAGE D'UN SYSTÈME D'ACCÈS, DISPOSITIF DE LECTURE, SYSTÈME, PRODUIT PROGRAMME INFORMATIQUE

(43) Veröffentlichungstag der Anmeldung: 22.11.2023
(73) Patentinhaber: dormakaba Schweiz AG, 8153 Rümlang (CH)
(72) Erfinder: Rappel, Christian, 8620 Wetzikon (CH)
(74) Vertreter: Balder IP Law, S.L.

(56) Entgegenhaltungen:
- EP-A2- 1 408 458
- US-A1- 2022 068 061

## Beschreibung

Die vorliegende Erfindung betrifft ein Verfahren zum Entriegeln eines Zutrittssystems mithilfe eines mobilen Endgeräts und/oder zur Fehlerermittlung, betreffend eine Entriegelung eines Zutrittssystems. Ferner betrifft die Erfindung eine Leseeinrichtung, ein System und ein Computerprogrammprodukt.

Zutrittssysteme, insbesondere Türsysteme, werden in oder an Gebäuden oder Arealen verwendet, um den Zutritt zu bestimmten Bereichen und Räumen zu steuern oder zu beschränken und einzelne Bereiche und Räume vom übrigen Gebäude oder Areal abzugrenzen. Eine Vielzahl von Zutrittssystemen weist dabei Schlossmechanismen auf, die nur durch berechtigte Personen entsperrt werden können. Mechanische Schlüssel werden hierbei immer häufiger durch elektronische Schlüsselsysteme ersetzt, bei denen ein Lesegerät des Zutrittssystems eine Berechtigungsinformation empfängt und das Zutrittssystem infolge dessen entriegelt bzw. öffnet.

In der Praxis kommen dabei verschiedene, insbesondere drahtlose, Kommunikationstechnologien infrage, mit denen die Kommunikation zur Entriegelung eines Zutrittssystems zwischen einem mobilen Endgerät eines Nutzers und der Leseeinrichtung des Zutrittssystems erfolgt. Es können dabei in der Praxis technische Probleme bei der Kommunikation zwischen mobilem Endgerät und Leseeinrichtung oder Softwareprobleme auf Seiten des mobilen Endgeräts oder der Leseeinrichtung auftreten, die ein reibungsloses Aufschließen des Zutrittssystems verhindern. Gerade bei häufig genutzten Zutrittssystemen kann dies zu erheblichen Problemen und Verzögerungen führen oder gänzlich verhindern, dass eine eigentlich berechtigte Person einen Raum oder ein Gebäude betreten kann.

EP 1 408 458 A2 offenbart ein Fernsteuerungssystem für Fahrzeuge mit einer tragbaren Sende- und Empfangsvorrichtung sowie einer fahrzeugseitigen Sende- und Empfangsvorrichtung. Die Sende- und Empfangsvorrichtungen weisen jeweils zwei Sender und zwei Empfänger auf, um die Funktionsfähigkeit der Sende- und Empfangsvorrichtungen bei Ausfall eines Senders und/oder Empfängers sicherzustellen.

US2022/068061A1 betrifft ein Verfahren zum Betrieb einer Zugangskontrollvorrichtung, wobei nach erfolgreichem Abgleichen eines übermittelten Berechtigungsnachweises mit hinterlegten Berechtigungsinformationen, ein Entsperrsignal an die Zugangskontrollvorrichtung gesendet wird.

Vor diesem Hintergrund stellt sich die Aufgabe, ein vorteilhaftes Verfahren zum Entriegeln eines Zutrittssystems mithilfe eines mobilen Endgeräts und/oder ein vorteilhaftes Verfahren zur Fehlerermittlung, betreffend eine Entriegelung eines Zutrittssystems, bereitzustellen, mit dem Probleme und Fehler bei Entriegelungsvorgängen effizient ermittelt werden können.

Die Aufgabe wird gelöst durch ein Verfahren zum Entriegeln eines Zutrittssystems mithilfe eines mobilen Endgeräts und/oder zur Fehlerermittlung, betreffend eine Entriegelung eines Zutrittssystems, wobei das Zutrittssystem eine Leseeinrichtung mit einer Kommunikationsschnittstelle zum Empfangen von Kommunikationssignalen des mobilen Endgeräts aufweist, wobei das Verfahren die folgenden Schritte umfasst:
--- a) Empfangen eines ersten Kommunikationssignals, betreffend eine Entriegelung des Zutrittssystems, durch die Leseeinrichtung von dem mobilen Endgerät zu einem ersten Zeitpunkt, wobei das erste Kommunikationssignal und/oder ein zusätzliches, von dem mobilen Endgerät an die Leseeinrichtung übermitteltes Kommunikationssignal eine Gerätetyp- und/oder Softwareinformation des mobilen Endgeräts aufweist,
--- b) Treffen einer Entriegelungsentscheidung für das Zutrittssystem - zu einem zweiten Zeitpunkt nach dem ersten Zeitpunkt - durch die Leseeinrichtung,
   wobei eine erste Zeitdauer zwischen dem ersten Zeitpunkt und dem zweiten Zeitpunkt ermittelt und/oder gemessen wird,
--- c) Durchführen einer Fehlerermittlung umfassend einen Abgleich der ersten Zeitdauer mit einem oder mehreren Schwellenwerten, wobei in Abhängigkeit des Abgleichs und der Gerätetyp- und/oder Softwareinformation ermittelt wird, ob Fehler oder Probleme bei der Entriegelung aufgetreten sind.

Erfindungsgemäß kann hierdurch eine vorteilhafte Ermittlung von Problemen bzw. Fehlern bei der Entriegelung des Zutrittssystems erfolgen, sodass Gegenmaßnahmen zur Beseitigung der Fehler ergriffen werden können. Anhand der ersten Zeitdauer kann bei der Fehlerermittlung festgestellt werden, ob die Zeitverzögerung zwischen der angefragten oder beauftragen Entriegelung mithilfe des ersten Kommunikationssignals und der Entriegelungsentscheidung ungewöhnlich lang ist. Beispielsweise ist es denkbar, dass die Fehlerermittlung in Schritt c) einen Abgleich der ersten Zeitdauer mit einem oder mehreren Schwellenwerten umfasst, wobei in Abhängigkeit des Abgleichs ermittelt wird, ob Fehler oder Probleme bei der Entriegelung aufgetreten sind. Es ist denkbar, dass als Teil der Fehlerermittlung in Schritt c) festgestellt wird, dass die Entriegelungsentscheidung negativ ausgefallen ist, das Zutrittssystem also nicht entriegelt wurde, und/oder dass die erste Zeitdauer ungewöhnlich lang war, beispielsweise oberhalb eines wählbaren Schwellenwerts liegt, was auf einen Fehler oder ein Problem, beispielsweise betreffend die Software des mobilen Endgeräts oder der Leseeinrichtung hindeuten kann.

Es ist vorzugsweise denkbar, dass die Schritte des erfindungsgemäßen Verfahrens für eine Vielzahl von Entriegelungsversuchen und/oder für eine Vielzahl unterschiedlicher mobiler Endgeräte wiederholt werden. Derart kann besonders vorteilhaft ermittelt werden, ob ein bestimmtes Zutrittssystem und/oder eine bestimmte Leseeinrichtung in der Praxis gehäuft Probleme oder Fehler aufweist. Dies kann beispielsweise einen Rückschluss darauf zulassen, dass die Leseeinrichtung ein Softwareupdate benötigt oder dass andere Softwareprobleme oder Hardwareprobleme, beispielsweise Probleme mit der Kommunikationsschnittstelle oder mit der Ansteuerung des Schlosses des Zutrittssystems, vorliegen. Es können somit gezielt Gegenmaßnahme, wie beispielswiese Reparaturarbeiten, eingeleitet werden.

Das erste Kommunikationssignal ist vorzugsweise ein initiales Kommunikationssignal, betreffend eine Entriegelung des Zutrittssystems durch das mobile Endgerät. Das erste Kommunikationssignal ist vorzugsweise Teil einer ersten Kontaktaufnahme zwischen dem mobilen Endgerät und der Leseeirichtung, betreffend einen Entriegelungsvorgang des Zutrittssystems. Das erste Kommunikationssignal wird vorzugsweise drahtlos übermittelt.

Die Kommunikationsschnittstelle der Leseeinrichtung zum Empfangen von Kommunikationssignalen des mobilen Endgeräts ist vorzugsweise eine drahtlose Kommunikationsschnittstelle.

Vorzugsweise misst die Leseeinrichtung in Schritt b) die erste Zeitdauer. Besonders bevorzugt ist es denkbar, dass die erste Zeitdauer die Zeitdauer zwischen dem ersten Zeitpunkt und dem zweiten Zeitpunkt ist.

Die Fehlerermittlung in Schritt c) wird vorzugsweise durch ein externes Serversystem, beispielsweise mithilfe einer Cloud, durchgeführt. Das Serversystem weist hierfür eine Kommunikationsverbindung mit dem Zutrittssystem und/oder dem mobilen Endgerät auf. Es ist denkbar, dass dem Serversystem zum Durchführen der Fehlerermittlung vor Schritt c) Informationen, die die erste Zeitdauer angeben, übermittelt werden. Alternativ ist es beispielsweise denkbar, dass die Fehlerermittlung in Schritt c) durch die Leseeinrichtung durchgeführt wird. Die Fehlerermittlung kann gemäß einer Ausführungsform der vorliegenden Erfindung auch als Fehlererfassung und/oder Fehleranalyse verstanden werden.

Das Zutrittssystem ist vorzugsweise ein Türsystem und/oder Vereinzelungssystem. Das Zutrittssystem ist vorzugsweise Teil eines Gebäudes und/oder Areals. Gemäß einer Ausführungsform der vorliegenden Erfindung ist es denkbar, dass das Zutrittssystem eines der folgenden Türsysteme und/oder Vereinzelungssysteme ist:
- eine Drehtür,
- eine Drehflügeltür,
- eine Karusselltür,
- eine Sicherheitskarusselltür,
- eine Personenschleuse,
- eine Schiebetür,
- eine Faltschiebetür,
- eine Drehsperre,
- ein Drehkreuz,
- eine Schwenktür.

Die Leseeinrichtung kann ein Bestandteil des Zutrittssystems sein oder eine separat von dem Zutrittssystem ausgebildete Einrichtung, die mit dem Zutrittssystem oder mit Subkomponenten des Zutrittssystem kommuniziert. Die Leseeinrichtung ist insbesondere zur Entriegelung eines Schlosses, insbesondere eines elektrischen Schlosses, des Zutrittssystems konfiguriert. Die Leseeinrichtung kann Computermittel des Zutrittssystems aufweisen oder als Teil der Computermittel des Zutrittssystems ausgebildet sein. Die Leseeinrichtung kann beispielsweise Teile einer Steuerungseinrichtung des Zutrittssystems aufweisen oder mit Teilen einer Steuerungseinrichtung des Zutrittssystems in Kommunikationsverbindung stehen.

Das erfindungsgemäße Verfahren ist insbesondere ein computerimplementiertes Verfahren, bei dem ein, mehrere oder alle Schritte des Verfahrens computerimplementiert ausgeführt werden.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass das erste Kommunikationssignal eine Berechtigungsinformation zur Entriegelung des Zutrittssystems aufweist, wobei die Leseeinrichtung vor und/oder als Teil der Entriegelungsentscheidung die Berechtigungsinformation prüft,
vorzugsweise wobei die Entriegelungsentscheidung in Schritt b) unter Berücksichtigung der Berechtigungsinformation getroffen wird. Das erste Kommunikationssignal ist vorzugsweise eine Anfrage oder Anweisung zur Entriegelung des Zutrittssystems durch das mobile Endgerät. Die Entriegelungsentscheidung ist insbesondere eine Entscheidung, ob das Zutrittssystem entriegelt wird oder nicht. Es ist denkbar, dass die Leseeinrichtung infolge der Entriegelungsentscheidung oder als Teil der Entriegelungsentscheidung eine Entriegelung des Schlosses des Zutrittssystems veranlasst, wenn die Prüfung der Berechtigungsinformation ergibt, dass die geprüfte Berechtigungsinformation zur Entriegelung des Zutrittssystem berechtigt.

Gemäß einer Ausführungsform der vorliegenden Erfindung ist es vorgesehen, dass das erste Kommunikationssignal und/oder ein zusätzliches, von dem mobilen Endgerät an die Leseeinrichtung übermitteltes Kommunikationssignal eine Gerätetyp- und/oder Softwareinformation des mobilen Endgeräts aufweist, wobei die Gerätetyp- und/oder Softwareinformation vorzugsweise eine der folgenden Informationen aufweist:
- eine Information, die einen Gerätetyp des mobilen Endgeräts angibt; und/oder
- eine Information, die eine Version und/oder einen Typ einer Softwareapplikation des mobilen Endgeräts angibt, wobei die Softwareapplikation von dem mobilen Endgerät zum Entriegeln des Zutrittssystems verwendet wird; und/oder
- eine Information, die eine Version und/oder einen Typ eines Betriebssystems des mobilen Endgeräts angibt. Die Gerätetyp- und/oder Softwareinformation gibt insbesondere eine Software- und/oder Hardware-Konfiguration des mobilen Endgeräts an. Es wird somit möglich, als Teil der Fehlerermittlung eine Verbindung zwischen der Software- und/oder Hardware-Konfiguration des mobilen Endgeräts und Fehlern oder Problemen beim Entriegelungsvorgang des Zutrittssystems herzustellen. Insbesondere können als Teil der Fehlerermittlung somit Fehler oder Probleme identifiziert werden, die durch bestimmte Software und/oder Hardware des mobilen Endgeräts, insbesondere in Kombination mit der Software und/oder Hardware der Leseeinrichtung, bedingt sind.

Gemäß einer Ausführungsform der vorliegenden Erfindung ist es vorgesehen, dass die Gerätetyp- und/oder Softwareinformation anonymisiert ist, insbesondere derart, dass die Gerätetyp- und/oder Softwareinformation nicht einer bestimmten Person und/oder einem bestimmten mobilen Endgerät zugeordnet werden kann. Hierdurch kann verhindert werden, dass Informationen einem bestimmten Nutzer zugeordnet werden können.

Gemäß einer Ausführungsform der vorliegenden Erfindung ist es vorgesehen, dass die Fehlerermittlung in Schritt c) zusätzlich in Abhängigkeit der Gerätetyp- und/oder Softwareinformation durchgeführt wird. Hierdurch kann eine Identifizierung und/oder Zuordnung von Fehlern oder Problemen bei der Entriegelung des Zutrittssystems zu bestimmten Gerätetypen, Softwareversionen oder Betriebssystemsversionen des mobilen Endgeräts erfolgen. Es ist beispielsweise denkbar, dass Probleme bei der Entriegelung des Zutrittssystems gehäuft oder ausschließlich für bestimmte Versionen einer Softwareapplikation auftreten, die mobile Endgeräte für die Entriegelung des Zutrittssystems verwenden, während andere, beispielsweise aktuellere, Softwareapplikationsversionen problemlos funktionieren. Hierdurch wird eine verbesserte Fehlerermittlung in Schritt c) möglich. Es können somit gezielt Probleme identifiziert werden und adäquate Gegenmaßnahmen zur Fehlerbehebung ergriffen werden.

Gemäß einer Ausführungsform der vorliegenden Erfindung ist es vorgesehen, dass als Teil der Fehlerermittlung in Schritt c) ermittelt wird, ob Fehler und/oder Probleme bei der Entriegelung des Zutrittssystems für:
- den Gerätetyp des mobilen Endgeräts; und/oder
- die Version und/oder den Typ der Softwareapplikation des mobilen Endgeräts; und/oder
- die Version und/oder den Typ des Betriebssystems des mobilen Endgeräts; und/oder
- eine Version und/oder einen Typ einer Software der Leseeinrichtung und/oder des Zutrittssystems vorliegen. Bei der Software der Leseeinrichtung kann es sich insbesondere um eine Firmware der Leseeinrichtung handeln.

Die Ermittlung, dass Fehler und/oder Probleme auf die Version und/oder den Typ der Software der Leseeinrichtung und/oder des Zutrittssystems zurückzuführen sind, kann beispielsweise dadurch erfolgen, dass beim mehrmaligen Wiederholen des erfindungsgemäßen Verfahrens ermittelt wird, dass
- bestimmte Typen von mobilen Endgeräten oder
- eine Vielzahl von mobilen Endgeräte und/oder eine Vielzahl von Softwareapplikationsversionen von mobilen Endgeräten systematische Probleme bei der Entriegelung des Zutrittssystems haben. Dies deutet darauf hin, dass eine Fehlfunktion der Leseeinrichtung vorliegt, die infolge einer derartige Fehlerermittlung gezielt behoben werden kann, beispielsweise durch ein Softwareupdate der Leseeinrichtung, durch einen Austausch der fehlerhaften Leseeinrichtung oder durch Reparaturarbeiten vor Ort.

Gemäß einer Ausführungsform der vorliegenden Erfindung ist es vorgesehen, dass das Verfahren ferner umfasst:
--- d) Ermitteln - durch die Leseeinrichtung - einer Anzahl an weiteren Entriegelungsversuchen und/oder weiteren ersten Kommunikationssignalen, die die Leseeinrichtung in einer festlegbaren zweiten Zeitdauer, beginnend mit dem ersten Zeitpunkt, empfängt, vorzugsweise von dem mobilen Endgerät,
wobei die Fehlerermittlung in Schritt c) zusätzlich unter Berücksichtigung der Anzahl an empfangenen weiteren Entriegelungsversuchen und/oder weiteren ersten Kommunikationssignalen durchgeführt wird.

Schritt d) wird vorzugsweise vor Schritt c) durchgeführt, sodass die ermittelte Anzahl an weiteren Entriegelungsversuchen und/oder weiteren ersten Kommunikationssignalen bei der Fehlerermittlung in Schritt c) zur Verfügung steht. Die Länge der zweiten Zeitdauer ist vorzugsweise festlegbar. Beispielswiese kann die zweite Zeitdauer fünf, sieben oder zehn Sekunden ab dem ersten Zeitpunkt betragen. Es ist insbesondere denkbar, dass das mobile Endgerät - insbesondere, wenn die Entriegelung des Zutrittssystems nicht wie erwartet funktioniert - nach dem ersten Kommunikationssignal weitere erste Kommunikationssignale übermittelt, und insbesondere weitere Entriegelungsversuche unternimmt. Vorzugsweise ist es möglich, dass solche weiteren ersten Kommunikationssignale und/oder weiteren Entriegelungsversuche innerhalb einer wählbaren zweiten Zeitdauer, die mit dem ersten Zeitpunkt beginnt, gezählt werden. Die ermittelte Anzahl an empfangenen weiteren Entriegelungsversuchen und/oder weiteren ersten Kommunikationssignalen kann in vorteilhafter Weise bei der Fehlerermittlung berücksichtigt werden. Beispielsweise deutet der Empfang von einem oder mehreren weiteren ersten Kommunikationssignalen durch die Leseeinrichtung innerhalb des zweiten Zeitraums auf ein Problem oder einen Fehler bei der Entriegelung des Zutrittssystems durch das mobile Endgerät hin. Mithilfe der Gerätetyp- und/oder Softwareinformation kann dabei in besonders vorteilhafter Weise nachgehalten werden, für welchen Gerätetyp und/oder welche Softwareapplikation und/oder welches Betriebssystem des mobilen Endgeräts und/oder welche Version der Software der Leseeinrichtung die Probleme aufgetreten sind.

Gemäß einer Ausführungsform der vorliegenden Erfindung ist es vorgesehen, dass die Fehlerermittlung in Schritt c) eine Ermittlung umfasst, ob Teile des empfangenen ersten Kommunikationssignals, insbesondere Teile der Berechtigungsinformation, unvollständig sind bzw. fehlen. Hierdurch kann ermittelt werden, ob Probleme bei der Kommunikation zwischen dem mobilen Endgerät und der Leseeinrichtung in Schritt a) vorliegen. Dies kann beispielsweise ein Hinweis darauf sein, dass eine Entfernung zwischen dem mobilen Endgerät und der Leseeinrichtung in Schritt a) zu groß war oder dass die Kommunikationsschnittstelle der Leseeinrichtung fehlerhaft ist. Wird das erfindungsgemäße Verfahren für eine Vielzahl von mobilen Endgeräten und/oder Entriegelungsversuchen wiederholt und fehlen dabei vermehrt Teile der empfangenen ersten Kommunikationssignale, deutet dies hingegen mit erhöhter Wahrscheinlichkeit auf eine fehlerhafte Kommunikationsschnittstelle der Leseeinrichtung hin.

Gemäß einer Ausführungsform der vorliegenden Erfindung ist es vorgesehen, dass die Fehlerermittlung in Schritt c) durch ein Serversystem durgeführt wird, wobei dem Serversystem vor Schritt c) Informationen übermittelt werden, die:
- die erste Zeitdauer, und
- optional die Gerätetyp- und/oder Softwareinformation und
- optional die Anzahl an empfangenen weiteren Entriegelungsversuchen und/oder weiteren ersten Kommunikationssignalen angeben. Es ist denkbar, dass diese Informationen von der Leseeinrichtung an das Serversystem übermittelt werden. Es ist alternative denkbar, dass diese Informationen von der Leseeinrichtung an das mobile Endgerät und von dem mobilen Endgerät an das Serversystem übermittelt werden. Die Übermittlung der Informationen kann beispielsweise mithilfe eines Telekommunikationsnetzes erfolgen. Die Übermittlung der Informationen mithilfe des mobilen Endgeräts hat dabei den Vorteil, dass die Leseeinrichtung bzw. deren Rechen- und Kommunikationskapazitäten entlastet werden. Das Serversystem kann durch einen oder mehrere physische Computer ausgebildet sein, beispielsweise mithilfe einer Cloud. Das Serversystem ist insbesondere ein externes Serversystem, das an einem anderen Ort als das Zutrittssystem angeordnet sein kann.

Gemäß einer Ausführungsform der vorliegenden Erfindung ist es vorgesehen, dass in Abhängigkeit der in Schritt c) durchgeführten Fehlerermittlung:
- eine Änderung und/oder Aktualisierung der Softwareapplikation des mobilen Endgeräts durchgeführt wird, wobei die Softwareapplikation von dem mobilen Endgerät zum Entriegeln des Zutrittssystems verwendet wird; und/oder
- eine Änderung und/oder Aktualisierung des Betriebssystems des mobilen Endgeräts durchgeführt wird; und/oder
- eine Änderung und/oder Aktualisierung der Software der Leseeinrichtung und/oder des Zutrittssystems durchgeführt wird. Diese oder andere Gegenmaßnahmen können in Reaktion auf die Fehlerermittlung zur Beseitigung von ermittelten Fehlern und/oder Problemen durchgeführt werden.

Gemäß einer Ausführungsform der vorliegenden Erfindung ist es vorgesehen, dass in Abhängigkeit der in Schritt c) durchgeführten Fehlerermittlung eine Nachricht an das mobile Endgerät übermittelt wird, insbesondere von dem Serversystem,
-- wobei die Nachricht eine Information zu einem in der Fehlerermittlung in Schritt c) ermittelten Fehler und/oder Problem aufweist; oder
-- wobei die Nachricht eine Aufforderung oder einen Hinweis:
   - zur Änderung und/oder Aktualisierung der Softwareapplikation des mobilen Endgeräts, und/oder
   - zur Änderung und/oder Aktualisierung des Betriebssystems des mobilen Endgeräts aufweist. Die derart mithilfe der Nachricht übermittelten Inforationen, Aufforderungen und/oder Hinweise sind zur Wiedergabe durch das mobile Endgerät, beispielsweise durch einen Bildschirm des mobilen Endgeräts, eingerichtet und so einem Nutzer des mobilen Endgeräts mitteilbar.

Gemäß einer Ausführungsform der vorliegenden Erfindung ist es vorgesehen, dass die Kommunikationsschnittstelle der Leseeinrichtung als eine NFC (Near Field Communication)-Kommunikationsschnittstelle, eine UWB (Ultrabreitband )-Kommunikationsschnittstelle oder eine BLE (Bluetooth Low Energy)-Kommunikationsschnittstelle ausgebildet ist, wobei das erste Kommunikationssignal vorzugsweise ein NFC-Kommunikationssignal, UWB-Kommunikationssignal oder BLE-Kommunikationssignal ist. Es kommen somit unterschiedliche Technologien für die Leseeinrichtung bzw. die Datenübermittlung zwischen einem mobilen Endgerät und der Leeeinrichtung zur Entriegelung des Zutrittssystems infrage.

Gemäß einer Ausführungsform der vorliegenden Erfindung ist es vorgesehen, dass dem mobilen Endgerät in Abhängigkeit der Fehlerermittlung in Schritt c) eine Positioniermitteilung übermittelt wird, wobei die Positioniermitteilung eine endgerätetypenabhängige Information und/oder Aufforderung zur Positionierung des mobilen Endgeräts relativ zur Leseeinrichtung aufweist, vorzugsweise wobei die endgerätetypenabhängige Information und/oder Aufforderung zur Positionierung über eine Wiedergabeeinrichtung des mobilen Endgeräts einem Nutzer mitgeteilt wird. Dies ist beispielsweise besonders vorteilhaft, wenn die Kommunikation zwischen dem mobilen Endgerät und der Leseeinrichtung zur Entriegelung des Zutrittssystems über NFC erfolgt. Unterschiedliche Endgerätetypen weisen typischerweise unterschiedliche Latenzen bei der Aktivierung ihrer NFC-Schaltungen auf. Ferner sind die NFC-Schaltungen je nach Gerätetyp an unterschiedlichen Positionen innerhalb eines mobilen Endgeräts verbaut, sodass für unterschiedliche Endgerätetypen hardwarebedingte Unterschiede vorliegen. Es ist gemäß einer Ausführungsform beispielsweise denkbar, dass das mobile Endgerät eine NFC-Schaltung, insbesondere einen RFID (radio-frequency identification )-Chip, zur Entriegelung des Zutrittssystems aufweist, wobei ein Serversystem und/oder das Zutrittssystem Zugriff auf eine Positionsinformation, betreffend eine endgerätetypenabhängige Positionierung einer NFC-Schaltung innerhalb eines mobilen Endgeräts, hat, wobei die an das mobile Endgerät übermittelte endgerätetypenabhängige Information und/oder Aufforderung für den Nutzer des mobilen Endgeräts zur Positionierung des mobilen Endgeräts relativ zur Leseeinrichtung abhängig von der endgerätetypenabhängigen Positionierung der NFC-Schaltung innerhalb des mobilen Endgeräts ist. Dem Nutzer kann durch die endgerätetypenabhängige Information und/oder Aufforderung somit mitgeteilt werden, wie der Nutzer (zur Entriegelung des Zutrittssystems) sein mobiles Endgerät relativ zur Leseeinrichtung ausrichten und/oder anordnen sollte, um das Zutrittssystem erfolgreich zu entriegeln. Beispielsweise kann dem Nutzer - für den Fall, dass die NFC-Schaltung am oberen Randbereich des mobilen Endgeräts angeordnet ist - durch die endgerätetypenabhängige Information und/oder Aufforderung mitgeteilt werden, dass der Nutzer den oberen Randbereich des mobilen Endgeräts möglichst nah an der Leseeinrichtung positionieren sollte.

Gemäß einer Ausführungsform der vorliegenden Erfindung ist es denkbar, dass die Leseeinrichtung ein Ranging, insbesondere ein UWB-Ranging, durchführt, wobei erfasst wird, in welche Richtung sich das mobile Endgerät bewegt und/oder wie schnell sich das mobile Endgerät bewegt. Es ist denkbar, dass die durch das Ranging ermittelten Daten bei der Fehlerermittlung verwendet werden.

Ein weiterer Gegenstand der vorliegenden Erfindung ist eine Leseeinrichtung für ein Zutrittssystem, wobei die Leseeinrichtung eine Kommunikationsschnittstelle zum Empfangen von Kommunikationssignalen eines mobilen Endgeräts aufweist,
--- wobei die Leseeinrichtung zum Empfangen eines ersten Kommunikationssignals, betreffend eine Entriegelung des Zutrittssystems, von dem mobilen Endgerät zu einem ersten Zeitpunkt konfiguriert ist,
--- wobei die Leseeinrichtung zum Treffen einer Entriegelungsentscheidung - zu einem zweiten Zeitpunkt nach dem ersten Zeitpunkt - konfiguriert ist,
wobei die Leseeinrichtung zum Ermitteln und/oder Messen einer ersten Zeitdauer in Abhängigkeit des ersten Zeitpunkts und des zweiten Zeitpunkts konfiguriert ist. Die Leseeinrichtung ermittelt und/oder misst die erste Zeitdauer zur Durchführung einer Fehlerermittlung in Abhängigkeit der ersten Zeitdauer.

Die Leseeinrichtung ist insbesondere zur Ausführung eines Verfahrens gemäß einer Ausführungsform der vorliegenden Erfindung konfiguriert, insbesondere zur Ausführung der Schritte a), b) und optional d). Vorzugsweise ist es denkbar, dass die Leseeinrichtung zur Übermittlung von Informationen, die die ermittelte und/oder gemessene erste Zeitdauer angeben, an ein Serversystem konfiguriert ist, wobei das die Fehlerermittlung durch das Serversystem durchgeführt wird. Es ist alternativ denkbar, dass die Leseeinrichtung zur Ausführung der Schritte a), b), c) und optional d) konfiguriert ist.

Ein weiterer Gegenstand der vorliegenden Erfindung ist ein System, wobei das System ein Zutrittssystem mit einer Leseeinrichtung und ein Serversystem umfasst,
wobei die Leseeinrichtung eine Kommunikationsschnittstelle zum Empfangen von Kommunikationssignalen eines mobilen Endgeräts aufweist,
   --- wobei die Leseeinrichtung zum Empfangen eines ersten Kommunikationssignals, betreffend eine Entriegelung des Zutrittssystems, von dem mobilen Endgerät zu einem ersten Zeitpunkt konfiguriert ist,
   --- wobei die Leseeinrichtung zum Treffen einer Entriegelungsentscheidung - zu einem zweiten Zeitpunkt nach dem ersten Zeitpunkt - konfiguriert ist,
wobei die Leseeinrichtung zum Ermitteln und/oder Messen einer ersten Zeitdauer in Abhängigkeit des ersten Zeitpunkts und des zweiten Zeitpunkts konfiguriert ist,
   --- wobei das Serversystem zum Durchführen einer Fehlerermittlung in Abhängigkeit der ersten Zeitdauer konfiguriert ist. Das System ist insbesondere zur Ausführung eines Verfahrens gemäß einer Ausführungsform der vorliegenden Erfindung konfiguriert.

Ein weiterer Gegenstand der vorliegenden Erfindung ist ein Computerprogrammprodukt, umfassend Befehle, die bei der Ausführung durch ein Computersystem und/oder eine Leseeinrichtung und/oder ein Serversystem, diese veranlassen, ein Verfahren gemäß einer Ausführungsform der vorliegenden Erfindung durchzuführen.

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für die erfindungsgemäße Leseeinrichtung, das erfindungsgemäße System und das erfindungsgemäße Computerprogrammprodukt dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind.

Nachfolgend sollen weitere Vorteile und Einzelheiten der Erfindung anhand der in den Zeichnungen dargestellten Ausführungsbeispiele erläutert werden. Hierin zeigen
- Fig. 1: eine schematische Darstellung eines Systems gemäß einem Ausführungsbeispiel der vorliegenden Erfindung; und
- Fig. 2 bis 4: jeweils schematische Darstellungen von Verfahren gemäß Ausführungsbeispielen der vorliegenden Erfindung.

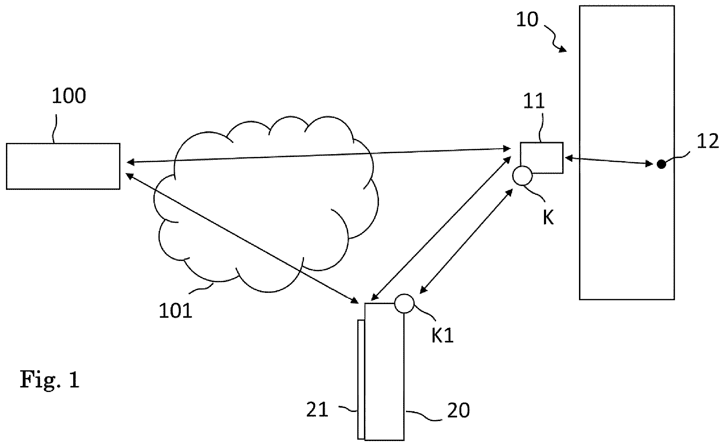

In Fig. 1 ist eine schematische Darstellung eines Systems gemäß einem Ausführungsbeispiel der vorliegenden Erfindung gezeigt. Ein Zutrittssystem 10, insbesondere ein Türsystem, weist ein Schloss 12 auf, mit dem ein Türelement des Zutrittssystems 10 verriegelt und entriegelt werden kann. Das Zutrittssystem 10 ist beispielsweise als Teil eines Gebäudes oder Areals ausgebildet. Als Teil des Zutrittssystems 10 oder in der Umgebung des Zutrittssystems 10 ist eine Leseeinrichtung 11 ausgebildet. Die Leseeinrichtung 11 ist zur Ansteuerung des Schlosses 12 konfiguriert und derart ausgebildet, dass sie das Schloss 12 entriegeln kann. Die Leseeinrichtung 11 weist eine Kommunikationsschnittstelle K auf, die zum Empfangen von Kommunikationssignalen von einem mobilen Endgerät 20 ausgebildet ist. Die Kommunikationsschnittstelle K kann beispielswiese ein NFC-Schnittstelle, eine UWB-Schnittstelle oder eine BLE-Schnittstelle sein. Das mobile Endgerät weist eine entsprechende Kommunikationsschnittstelle K1 auf. Über die Kommunikationsschnittstellen K und K1 können Signale zur Entriegelung des Schlosses 12 des Zutrittssystems 10 von dem mobilen Endgerät 20 an die Leseeinrichtung 11 übermittelt werden. Das mobile Endgerät 20 wird von einem Nutzer mitgeführt. Es kann sich bei dem mobilen Endgerät 20 beispielsweise um ein Smartphone oder einen elektronische Schlüsselvorrichtung handeln. Das mobile Endgerät 20 weist vorzugsweise eine Wiedergabeeinrichtung 21, beispielsweise ein Display, auf. Durch die Wiedergabeeinrichtung 21 können einem Nutzer des mobilen Endgeräts 20 Informationen mitgeteilt werden. Das mobile Endgerät 20 und/oder die Leseeinrichtung 11 können über ein Kommunikationsnetz 101, beispielsweise ein Mobilfunknetz, Kommunikationsverbindungen mit einem Serversystem 100, beispielsweise einem Cloud-System, herstellen.

In Fig, 2 ist eine schematische Darstellung eines Verfahrens zum Entriegeln eines Zutrittssystems 10 mithilfe eines mobilen Endgeräts 20 und/oder zur Fehlerermittlung, betreffend eine Entriegelung eines Zutrittssystems 10, gemäß einer Ausführungsform der vorliegenden Erfindung gezeigt. In einem Schritt S21 erfolgt ein Empfangen eines ersten Kommunikationssignals, betreffend eine Entriegelung des Zutrittssystems 10, durch eine Leseeinrichtung 11 des Zutrittssystems 10 von einem mobilen Endgerät 20 zu einem ersten Zeitpunkt. Das erste Kommunikationssignal ist insbesondere ein initiales Kommunikationssignal, dass zur Entriegelung des Zutrittssystems 10 von dem mobilen Endgerät 20 über seine Kommunikationsschnittstelle K1 und die Kommunikationsschnittstelle K der Leseeinrichtung 11 übermittelt wird. Das erste Kommunikationssignal umfasst insbesondere eine Berechtigungsinformation, die eine Berechtigung zur Entriegelung des Zutrittssystems 10 anzeigt. In einem S22 erfolgt ein Treffen einer Entriegelungsentscheidung für das Zutrittssystem 10 - zu einem zweiten Zeitpunkt nach dem ersten Zeitpunkt - durch die Leseeinrichtung 11, wobei eine erste Zeitdauer in Abhängigkeit des ersten Zeitpunkts und des zweiten Zeitpunkts ermittelt und/oder gemessen wird. Vorzugsweise ist die erste Zeitdauer die Zeitspanne, die zwischen dem ersten und zweiten Zeitpunkt verstreicht, also insbesondere eine Latenz zwischen Entriegelungsanfrage und Entriegelungsentscheidung. In einem Schritt S23 erfolgt ein Durchführen einer Fehlerermittlung in Abhängigkeit der ersten Zeitdauer. Die Länge der ersten Zeitdauer ist insbesondere davon abhängig, ob Probleme oder Fehler bei der mithilfe des ersten Kommunikationssignals angefragten Entriegelung des Zutrittssystems 10 aufgetreten sind. Beispielsweise ist es denkbar, dass die Fehlerermittlung in Schritt S23 einen Abgleich der ersten Zeitdauer mit einem oder mehreren Schwellenwerten umfasst, wobei in Abhängigkeit des Abgleichs ermittelt wird, ob Fehler oder Probleme bei der Entriegelung aufgetreten sind. Die Fehlerermittlung in Schritt S23 wird vorzugsweise durch das Serversystem 100 durchgeführt. Das Serversystem erhält hierfür vor Schritt S23 Informationen, die die erste Zeitdauer angeben, beispielsweise von der Leseeinrichtung 11. Alternativ ist es beispielsweise denkbar, dass die Fehlerermittlung in S23 durch die Leseeinrichtung 11 durchgeführt wird.

Es ist vorzugsweise denkbar, dass die Schritte des Verfahrens für eine Vielzahl von Entriegelungsversuchen und/oder für eine Vielzahl unterschiedlicher mobiler Endgeräte wiederholt werden. Derart kann besonders vorteilhaft ermittelt werden, ob für das Zutrittssystem 10 und/oder die Leseeinrichtung 11 wiederkehrende Probleme oder Fehler auftreten. Aus wiederkehrenden Problemen, betreffend die gleiche Leseeinrichtung 11, kann beispielsweise ein gefolgert werden, dass die Leseeinrichtung 11 ein Softwareupdate benötigt oder technische Probleme für die Kommunikationsschnittstelle K oder bei der Ansteuerung des Schlosses 12 des Zutrittssystems 10 vorliegen. Es können somit gezielt Gegenmaßnahme, wie beispielswiese Reparaturarbeiten, eingeleitet werden.

In Fig, 3 ist eine schematische Darstellung eines Verfahrens zum Entriegeln eines Zutrittssystems 10 mithilfe eines mobilen Endgeräts 20 und/oder zur Fehlerermittlung, betreffend eine Entriegelung eines Zutrittssystems 10, gemäß einer Ausführungsform der vorliegenden Erfindung gezeigt. In einem Schritt S31 erfolgt ein Empfangen eines ersten Kommunikationssignals, betreffend eine Entriegelung des Zutrittssystems 10, durch eine Leseeinrichtung 11 des Zutrittssystems 10 von einem mobilen Endgerät 20 zu einem ersten Zeitpunkt, wobei das erste Kommunikationssignal eine Gerätetyp- und/oder Softwareinformation des mobilen Endgeräts aufweist. Die Gerätetyp- und/oder Softwareinformation weist vorzugsweise eine, mehrere oder alle der folgenden Informationen in anonymisierter Form auf:
- eine Information, die einen Gerätetyp des mobilen Endgeräts 20 angibt; und/oder
- eine Information, die eine Version und/oder einen Typ einer Softwareapplikation des mobilen Endgeräts 20 angibt, die von dem mobilen Endgerät 20 zum Entriegeln des Zutrittssystems 10 verwendet wird; und/oder
- eine Information, die eine Version und/oder einen Typ eines Betriebssystems des mobilen Endgeräts 20 angibt. In einem Schritt S32 erfolgt ein Treffen einer Entriegelungsentscheidung für das Zutrittssystem 10 - zu einem zweiten Zeitpunkt nach dem ersten Zeitpunkt - durch die Leseeinrichtung 11,
wobei eine erste Zeitdauer in Abhängigkeit des ersten Zeitpunkts und des zweiten Zeitpunkts ermittelt und/oder gemessen wird. In einem Schritt S33 erfolgt ein Durchführen einer Fehlerermittlung in Abhängigkeit der ersten Zeitdauer und der Gerätetyp- und/oder Software information. Es kann somit eine spezifische Problemermittlung erfolgen, die eine besonders vorteilhafte Einleitung von Gegenmaßnahmen ermöglicht. Insbesondere kann als Teil der Fehlerermittlung durch die Berücksichtigung der Gerätetyp- und/oder Softwareinformation ermittelt werden, ob Fehler und/oder Probleme bei der Entriegelung des Zutrittssystems 10 für:
- den Gerätetyp des mobilen Endgeräts 20; und/oder
- die Version und/oder den Typ der Softwareapplikation des mobilen Endgeräts 20; und/oder
- die Version und/oder den Typ des Betriebssystems des mobilen Endgeräts 20; und/oder
- eine Version und/oder einen Typ einer Software der Leseeinrichtung 11 und/oder des Zutrittssystems 10 vorliegen. Beispielsweise können so auch Probleme ermittelt und/oder zugeordnet werden, die sich aus einer Kombination der Version und/oder des Typs der Software der Leseeinrichtung 11 mit der Version und/oder dem Typ der Softwareapplikation des mobilen Endgeräts 20 ergeben.

Es ist vorzugsweise denkbar, dass die Schritte des Verfahrens für eine Vielzahl von Entriegelungsversuchen und/oder für eine Vielzahl unterschiedlicher mobiler Endgeräte 20 wiederholt werden, wobei eine Identifizierung von Problemen oder Fehlern bei der Entriegelung des Zutrittssystems 10 für:
- bestimmte Gerätetypen von mobilen Endgeräten; und/oder
- bestimmte Versionen und/oder Typen von Softwareapplikation, die mobile Endgeräte zur Entriegelung des Zutrittssystems 10 verwenden; und/oder
- bestimmten Version und/oder Typen von Betriebssystemen von mobilen Endgeräten; und/oder
- eine bestimmte Version und/oder einen bestimmten Typ einer Software der Leseeinrichtung 11 und/oder des Zutrittssystems 10 durchgeführt wird.

Es ist denkbar, dass in Abhängigkeit der Fehlerermittlung, insbesondere in Abhängigkeit eines ermittelten Fehlers oder Problems:
- eine Änderung und/oder Aktualisierung der Softwareapplikation des mobilen Endgeräts 20 durchgeführt wird; und/oder
- eine Änderung und/oder Aktualisierung des Betriebssystems des mobilen

Endgeräts 20 durchgeführt wird; und/oder
- eine Änderung und/oder Aktualisierung der Software der Leseeinrichtung 11 und/oder des Zutrittssystems 10 durchgeführt wird.

Es ist alternativ oder zusätzlich denkbar, dass in Abhängigkeit der Fehlerermittlung, insbesondere in Abhängigkeit eines ermittelten Fehlers oder Problems, eine Nachricht von dem Serversystem 100 an das mobile Endgerät 20 übermittelt wird,
-- wobei die Nachricht eine Information zu einem in der Fehlerermittlung ermittelten Fehler und/oder Problem aufweist; oder
-- wobei die Nachricht eine Aufforderung oder einen Hinweis:
   - zur Änderung und/oder Aktualisierung der Softwareapplikation des mobilen Endgeräts 20, und/oder
   - zur Änderung und/oder Aktualisierung des Betriebssystems des mobilen Endgeräts 20 aufweist. Der Inhalt der Nachricht wird einem Nutzer des mobilen Endgeräts beispielsweise über die Wiedergabeeinrichtung 21 des mobilen Endgeräts 20 dargestellt.

In Fig, 4 ist eine schematische Darstellung eines Verfahrens zum Entriegeln eines Zutrittssystems 10 mithilfe eines mobilen Endgeräts 20 und/oder zur Fehlerermittlung, betreffend eine Entriegelung eines Zutrittssystems 10, gemäß einer Ausführungsform der vorliegenden Erfindung gezeigt. In einem Schritt S41 erfolgt ein Empfangen eines ersten Kommunikationssignals, betreffend eine Entriegelung des Zutrittssystems 10, durch eine Leseeinrichtung 11 des Zutrittssystems 10 von einem mobilen Endgerät 20 zu einem ersten Zeitpunkt, wobei das erste Kommunikationssignal eine Gerätetyp- und/oder Softwareinformation des mobilen Endgeräts 20 aufweist. In einem Schritt S42 erfolgt ein Ermitteln - durch die Leseeinrichtung 11 - einer Anzahl an weiteren Entriegelungsversuchen und/oder weiteren ersten Kommunikationssignalen, die die Leseeinrichtung in einer festlegbaren zweiten Zeitdauer, beginnend mit dem ersten Zeitpunkt, empfängt. Vorzugsweise betrifft die ermittelte Anzahl hierbei
- die Anzahl an weiteren Entriegelungsversuchen und/oder weiteren ersten Kommunikationssignalen, die die Leseeinrichtung 11 in der festlegbaren zweiten Zeitdauer, beginnend mit dem ersten Zeitpunkt, von dem mobilen Endgerät 20 empfängt, oder
- ob die Leseeinrichtung 11 in der festlegbaren zweiten Zeitdauer, beginnend mit dem ersten Zeitpunkt, von dem mobilen Endgerät 20 überhaupt einen weiteren Entriegelungsversuch und/oder ein weiteres erstes Kommunikationssignal empfängt. Es kann somit nachgehalten werden, ob nach dem ersten Kommunikationssignal innerhalb der zweiten Zeitdauer weitere Entriegelungsversuche von dem mobilen Endgerät 20 unternommen werden. Dies ist typischerweise ein Indiz dafür, dass es Probleme mit dem ersten Entriegelungsversuch gab und kann daher eine besonders vorteilhafte Fehlerermittlung ermöglichen. In einem Schritt S43 erfolgt ein Treffen einer Entriegelungsentscheidung für das Zutrittssystem 10 - zu einem zweiten Zeitpunkt nach dem ersten Zeitpunkt - durch die Leseeinrichtung 11,
wobei eine erste Zeitdauer in Abhängigkeit des ersten Zeitpunkts und des zweiten Zeitpunkts ermittelt und/oder gemessen wird. Dem Serversystem 100 werden von der Leseeinrichtung 11 und/oder dem mobilen Endgerät 20 Informationen übermittelt, die:
- die erste Zeitdauer, und
- die Gerätetyp- und/oder Softwareinformation und
- die Anzahl an empfangenen weiteren Entriegelungsversuchen und/oder weiteren ersten Kommunikationssignalen während der zweiten Zeitdauer angeben. Das Serversystem 100 verwendet diese Information in Schritt S44. In Schritt S44 erfolgt ein Durchführen einer Fehlerermittlung in Abhängigkeit der ersten Zeitdauer, der Gerätetyp- und/oder Softwareinformation und der Anzahl an durch die Leseeinrichtung 11 empfangenen weiteren Entriegelungsversuchen und/oder weiteren ersten Kommunikationssignalen während der zweiten Zeitdauer. Hierdurch wird eine besonders vorteilhafte Fehlerermittlung möglich.

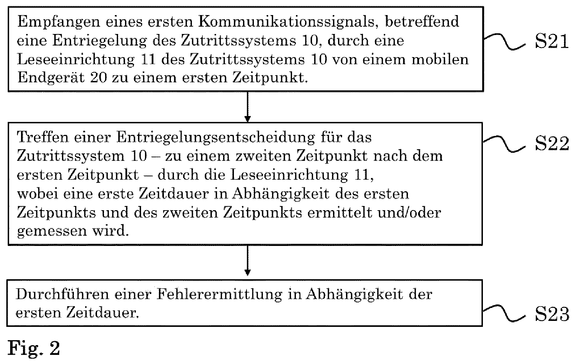

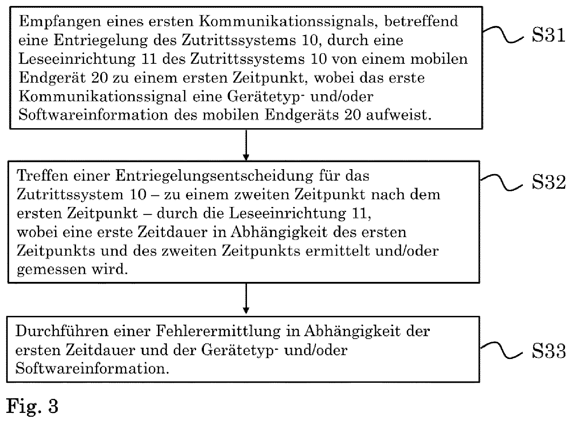

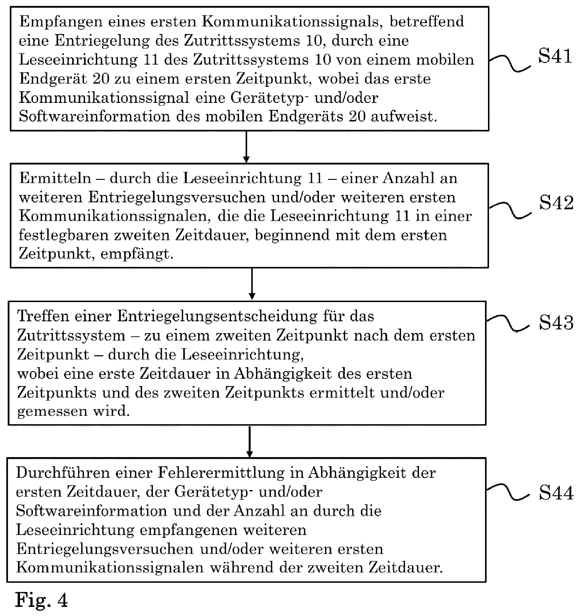

Merkmale der in den Figuren 2, 3 und 4 dargestellten Ausführungsbeispiele können untereinander kombiniert werden.

### Bezugszeichenliste

- 10: Zutrittssystem
- 11: Leseeinrichtung
- 12: Schloss
- 20: mobiles Endgerät
- 21: Wiedergabeeinrichtung
- 100: Serversystem
- 101: Kommunikationsnetz
- K: Kommunikationsschnittstelle
- K1: Kommunikationsschnittstelle
- S21 - S23: Schritte
- S31 - S33: Schritte
- S41 - S44: Schritte

## Patentansprüche

1. Verfahren zum Entriegeln eines Zutrittssystems (10) mithilfe eines mobilen Endgeräts (20) und/oder zur Fehlerermittlung, betreffend eine Entriegelung eines Zutrittssystems (10),
wobei das Zutrittssystem (10) eine Leseeinrichtung (11) mit einer Kommunikationsschnittstelle (K) zum Empfangen von Kommunikationssignalen des mobilen Endgeräts (20) aufweist, wobei das Verfahren die folgenden Schritte umfasst:
--- a) Empfangen eines ersten Kommunikationssignals, betreffend eine Entriegelung des Zutrittssystems (10), durch die Leseeinrichtung (11) von dem mobilen Endgerät (20) zu einem ersten Zeitpunkt, wobei das erste Kommunikationssignal und/oder ein zusätzliches, von dem mobilen Endgerät (20) an die Leseeinrichtung (11) übermitteltes Kommunikationssignal eine Gerätetyp- und/oder Softwareinformation des mobilen Endgeräts (20) aufweist,
--- b) Treffen einer Entriegelungsentscheidung für das Zutrittssystem (10) - zu einem zweiten Zeitpunkt nach dem ersten Zeitpunkt - durch die Leseeinrichtung (11),
wobei eine erste Zeitdauer zwischen dem ersten Zeitpunkt und dem zweiten Zeitpunkt ermittelt und/oder gemessen wird,
--- c) Durchführen einer Fehlerermittlung umfassend einen Abgleich der ersten Zeitdauer mit einem oder mehreren Schwellenwerten, wobei in Abhängigkeit des Abgleichs und der Gerätetyp- und/oder Softwareinformation ermittelt wird, ob Fehler oder Probleme bei der Entriegelung aufgetreten sind.

2. Verfahren nach Anspruch 1, wobei das erste Kommunikationssignal eine Berechtigungsinformation zur Entriegelung des Zutrittssystems (10) aufweist,
wobei die Leseeinrichtung (11) vor und/oder als Teil der Entriegelungsentscheidung die Berechtigungsinformation prüft, vorzugsweise wobei die Entriegelungsentscheidung in Schritt b) unter Berücksichtigung der Berechtigungsinformation getroffen wird.

3. Verfahren nach einem der vorhergehenden Ansprüche, wobei die Gerätetyp- und/oder Softwareinformation eine der folgenden Informationen aufweist:
- eine Information, die einen Gerätetyp des mobilen Endgeräts (20) angibt; und/oder
- eine Information, die eine Version und/oder einen Typ einer Softwareapplikation des mobilen Endgeräts (20) angibt, wobei die Softwareapplikation von dem mobilen Endgerät (20) zum Entriegeln des Zutrittssystems (10) verwendet wird; und/oder
- eine Information, die eine Version und/oder einen Typ eines Betriebssystems des mobilen Endgeräts (20) angibt.

4. Verfahren nach einem der vorhergehenden Ansprüche, wobei als Teil der Fehlerermittlung in Schritt c) ermittelt wird,
ob Fehler und/oder Probleme bei der Entriegelung des Zutrittssystems (10) für:
- den Gerätetyp des mobilen Endgeräts (20); und/oder
- die Version und/oder den Typ der Softwareapplikation des mobilen Endgeräts (20); und/oder
- die Version und/oder den Typ des Betriebssystems des mobilen Endgeräts (20); und/oder
- eine Version und/oder einen Typ einer Software der Leseeinrichtung (11) und/oder des Zutrittssystems (10)
vorliegen.

5. Verfahren nach einem der vorhergehenden Ansprüche, wobei das Verfahren ferner umfasst:
--- d) Ermitteln - durch die Leseeinrichtung (11) - einer Anzahl an weiteren Entriegelungsversuchen und/oder weiteren ersten Kommunikationssignalen, die die Leseeinrichtung (11) in einer festlegbaren zweiten Zeitdauer, beginnend mit dem ersten Zeitpunkt, empfängt, vorzugsweise von dem mobilen Endgerät (20),
wobei die Fehlerermittlung in Schritt c) zusätzlich unter Berücksichtigung der Anzahl an empfangenen weiteren Entriegelungsversuchen und/oder weiteren ersten Kommunikationssignalen durchgeführt wird.

6. Verfahren nach einem der vorhergehenden Ansprüche,
wobei die Fehlerermittlung in Schritt c) durch ein Serversystem (100) durgeführt wird,
wobei dem Serversystem (100) vor Schritt c) Informationen übermittelt werden, die:
- die erste Zeitdauer, und
- die Gerätetyp- und/oder Softwareinformation und
- optional die Anzahl an empfangenen weiteren Entriegelungsversuchen und/oder weiteren ersten Kommunikationssignalen
angeben.

7. Verfahren nach einem der vorhergehenden Ansprüche, wobei in Abhängigkeit der in Schritt c) durchgeführten Fehlerermittlung:
- eine Änderung und/oder Aktualisierung der Softwareapplikation des mobilen Endgeräts (20) durchgeführt wird, wobei die Softwareapplikation von dem mobilen Endgerät (20) zum Entriegeln des Zutrittssystems verwendet wird; und/oder
- eine Änderung und/oder Aktualisierung des Betriebssystems des mobilen Endgeräts (20) durchgeführt wird; und/oder
- eine Änderung und/oder Aktualisierung der Software der Leseeinrichtung (11) und/oder des Zutrittssystems (10) durchgeführt wird.

8. Verfahren nach einem der vorhergehenden Ansprüche, wobei in Abhängigkeit der in Schritt c) durchgeführten Fehlerermittlung eine Nachricht an das mobile Endgerät (20) übermittelt wird, insbesondere von dem Serversystem (100),
-- wobei die Nachricht eine Information zu einem in der Fehlerermittlung in Schritt c) ermittelten Fehler und/oder Problem aufweist; oder
-- wobei die Nachricht eine Aufforderung oder einen Hinweis:
- zur Änderung und/oder Aktualisierung der Softwareapplikation des mobilen Endgeräts (20), und/oder
- zur Änderung und/oder Aktualisierung des Betriebssystems des mobilen Endgeräts (20)
aufweist.

9. Verfahren nach einem der vorhergehenden Ansprüche,
wobei die Kommunikationsschnittstelle (K) der Leseeinrichtung (11) als eine NFC-Kommunikationsschnittstelle, eine UWB-Kommunikationsschnittstelle oder eine BLE-Kommunikationsschnittstelle ausgebildet ist, wobei das erste Kommunikationssignal vorzugsweise ein NFC-Kommunikationssignal, UWB-Kommunikationssignal oder BLE-Kommunikationssignal ist.

10. Verfahren nach einem der vorhergehenden Ansprüche,
wobei dem mobilen Endgerät (20) in Abhängigkeit der Fehlerermittlung in Schritt c) eine Positioniermitteilung übermittelt wird, wobei die Positioniermitteilung eine endgerätetypenabhängige Information und/oder Aufforderung zur Positionierung des mobilen Endgeräts (20) relativ zur Leseeinrichtung (11) aufweist, vorzugsweise wobei die endgerätetypenabhängige Information und/oder Aufforderung zur Positionierung über eine Wiedergabeeinrichtung des mobilen Endgeräts (20) einem Nutzer mitgeteilt wird.

11. Leseeinrichtung (11) für ein Zutrittssystem (10), konfiguriert zur Ausführung eines Verfahrens gemäß einem der Ansprüche 1 bis 10, wobei die Leseeinrichtung (11) eine Kommunikationsschnittstelle (K) zum Empfangen von Kommunikationssignalen eines mobilen Endgeräts (20) aufweist,
--- wobei die Leseeinrichtung (11) zum Empfangen eines ersten Kommunikationssignals, betreffend eine Entriegelung des Zutrittssystems (10), von dem mobilen Endgerät (20) zu einem ersten Zeitpunkt konfiguriert ist,
--- wobei die Leseeinrichtung (11) zum Treffen einer Entriegelungsentscheidung - zu einem zweiten Zeitpunkt nach dem ersten Zeitpunkt - konfiguriert ist,
wobei die Leseeinrichtung (11) zum Ermitteln und/oder Messen einer ersten Zeitdauer zwischen dem ersten Zeitpunkt und dem zweiten Zeitpunkt konfiguriert ist, und wobei die Leseeinrichtung zum Durchführen einer Fehlerermittlung umfassend einen Abgleich der ersten Zeitdauer mit einem oder mehreren Schwellenwerten konfiguriert ist.

12. System, konfiguriert zur Ausführung eines Verfahrens gemäß einem der Ansprüche 1 bis 10, wobei das System ein Zutrittssystem (10) mit einer Leseeinrichtung (11) und ein Serversystem (100) umfasst,
wobei die Leseeinrichtung (11) eine Kommunikationsschnittstelle (K) zum Empfangen von Kommunikationssignalen eines mobilen Endgeräts (20) aufweist,
--- wobei die Leseeinrichtung (11) zum Empfangen eines ersten Kommunikationssignals, betreffend eine Entriegelung des Zutrittssystems (10), von dem mobilen Endgerät (20) zu einem ersten Zeitpunkt konfiguriert ist,
--- wobei die Leseeinrichtung (11) zum Treffen einer Entriegelungsentscheidung - zu einem zweiten Zeitpunkt nach dem ersten Zeitpunkt - konfiguriert ist,
wobei die Leseeinrichtung (11) zum Ermitteln und/oder Messen einer ersten Zeitdauer zwischen dem ersten Zeitpunkt und dem zweiten Zeitpunkt konfiguriert ist,
--- wobei das Serversystem (10) zum Durchführen einer Fehlerermittlung in Abhängigkeit der ersten Zeitdauer konfiguriert ist.

13. Computerprogrammprodukt, umfassend Befehle, die bei der Ausführung durch eine Leseeinrichtung Leseeinrichtung nach Anspruch 11 und/oder ein System nach Anspruch 12, diese veranlassen, ein Verfahren nach einem der Ansprüche 1 bis 10 durchzuführen.

## Claims

1. A method for unbolting an access system (10) using a mobile terminal (20) and/or for error determination relating to an access system (10) being unbolted,
wherein the access system (10) comprises a reading apparatus (II) with a communication interface (K) for receiving communication signals from the mobile terminal (20), wherein the method comprises the following steps:
--- a) receiving a first communication signal, relating to the access system (10) being unbolted, by way of the reading apparatus (II) from the mobile terminal (20) at a first point in time, wherein the first communication signal and/or an additional communication signal transmitted by the mobile terminal (20) to the reading apparatus (II) comprises device type and/or software information of the mobile terminal (20),
--- b) making an unbolting decision for the access system (10) - at a second point in time after the first point in time - by way of the reading apparatus (II),
wherein a first time duration between the first point in time and the second point in time is determined and/or measured,
--- c) carrying out an error determination comprising a comparison of the first time duration with one or a plurality of threshold values, wherein, depending on the comparison and the device type and/or
software information, it is determined whether errors or problems have occurred during unbolting.

2. The method according to claim 1, wherein the first communication signal has authorisation information for unbolting the access system (10),
wherein the reading apparatus (II) checks the authorisation information before and/or as part of the unbolting decision, preferably wherein the unbolting decision in step b) is made taking into account the authorisation information.

3. The method according to one of the preceding claims, wherein the device type and/or software information has one of the following items of information:
- information indicating a device type of the mobile terminal (20); and/or
- information indicating a version and/or type of a software application of the mobile terminal (20), wherein the software application is used by the mobile terminal (20) to unbolt the access system (10); and/or
- information indicating a version and/or type of an operating system of the mobile terminal (20).

4. The method according to one of the preceding claims, wherein, as part of the error determination in step c), it is determined,
whether there are errors and/or problems with the access system (10) being unbolted for:
- the device type of the mobile terminal (20); and/or
- the version and/or type of the software application of the mobile terminal (20); and/or
- the version and/or type of operating system of the mobile terminal (20); and/or
- a version and/or a type of software of the reading apparatus (11) and/or the access system (10).

5. The method according to one of the preceding claims, wherein the method also comprises:
--- d) determining - by way of the reading apparatus (II) - a number of further unbolting attempts and/or further first communication signals which the reading apparatus (II) receives, preferably from the mobile terminal (20), in a determinable second time duration, starting with the first point in time,
wherein the error determination in step c) is additionally carried out taking into account the number of further unbolting attempts received and/or further first communication signals.

6. The method according to one of the preceding claims,
wherein the error determination in step c) is carried out by a server system (100),
wherein information is transmitted to the server system (100) before step c) which indicates:
- the first time duration, and
- the device type and/or software information and
- optionally the number of further unbolting attempts received and/or further first communication signals.

7. The method according to one of the preceding claims, wherein, depending on the error determination carried out in step c):
- a change and/or update of the software application of the mobile terminal (20) is carried out, wherein the software application is used by the mobile terminal (20) to unbolt the access system; and/or
- a change and/or update of the operating system of the mobile terminal (20) is carried out; and/or
- a change and/or update of the software of the reading apparatus (II) and/or the access system (10) is carried out.

8. The method according to one of the preceding claims, wherein, depending on the error determination carried out in step c), a message is transmitted to the mobile terminal (20), in particular by the server system (100),
-- wherein the message has information on an error and/or problem determined in the error determination in step c); or
-- wherein the message is a request or a notification:
- for modifying and/or updating the software application of the mobile terminal (20), and/or
- for modifying and/or updating the operating system of the mobile terminal (20).

9. The method according to one of the preceding claims,
wherein the communication interface (K) of the reading apparatus (II) is designed as an NFC communication interface, a UWB communication interface or a BLE communication interface, wherein the first communication signal is preferably an NFC communication signal, UWB communication signal or BLE communication signal.

10. The method according to one of the preceding claims, wherein a positioning message is transmitted to the mobile terminal (20) depending on the error determination in step c), wherein the positioning message comprises terminal-type-dependent information and/or request for positioning the mobile terminal (20) relative to the reading apparatus (II), preferably wherein the terminal-type-dependent information and/or request for positioning is communicated to a user via a playback apparatus of the mobile terminal (20).

11. A reading apparatus (II) for an access system (10) configured to perform a method according to one of claims 1 to 10, wherein the reading apparatus (II) has a communication interface (K) for receiving communication signals from a mobile terminal (20),
--- wherein the reading apparatus (II) is configured to receive a first communication signal, relating to the access system (10) being unbolted, from the mobile terminal (20) at a first point in time,
--- wherein the reading apparatus (II) is configured to make an unbolting decision
- at a second point in time after the first point in time,
wherein the reading apparatus (II) is configured to determine and/or measure a first time duration between the first point in time and the second point in time, and wherein the reading apparatus is configured to carry out an error determination comprising a comparison of the first time duration with one or a plurality of threshold values.

12. A system configured to perform a method according to one of claims 1 to 10, wherein the system comprises an access system (10) with a reading apparatus (II) and a server system (100), wherein the reading apparatus (II) has a communication interface (K) for receiving communication signals from a mobile terminal (20),
--- wherein the reading apparatus (II) is configured to receive a first communication signal, relating to the access system (10) being unbolted, from the mobile terminal (20) at a first point in time,
--- wherein the reading apparatus (II) is configured to make an unbolting decision
- at a second point in time after the first point in time,
wherein the reading apparatus (II) is configured to determine and/or measure a first time duration between the first point in time and the second point in time,
--- wherein the server system (10) is configured to carry out an error determination depending on the first time duration.

13. A computer program product comprising instructions which, when executed by a reading apparatus according to claim 11 and/or a system according to claim 12, cause it to carry out a method according to one of claims 1 to 10.

## Revendications

1. Procédé pour le déverrouillage d'un système d'accès (10) à l'aide d'un terminal mobile (20) et/ou pour la détection d'erreurs, concernant un déverrouillage d'un système d'accès (10),
dans lequel le système d'accès (10) présente un dispositif de lecture (II) comportant une interface de communication (K) pour la réception de signaux de communication du terminal mobile (20), dans lequel le procédé comprend les étapes suivantes :
--- a) réception d'un premier signal de communication, concernant un déverrouillage du système d'accès (10), par le dispositif de lecture (II) du terminal mobile (20) à un premier moment, dans lequel le premier signal de communication et/ou un signal de communication supplémentaire transmis par le terminal mobile (20) au dispositif de lecture (II) présente une information de type d'appareil et/ou de logiciel du terminal mobile (20),
--- b) prise d'une décision de déverrouillage pour le système d'accès (10) - à un second moment après le premier moment - par le dispositif de lecture (II),
dans lequel une première durée entre le premier moment et le second moment est détectée et/ou mesurée,
--- c) réalisation d'une détection d'erreurs comprenant une comparaison de la première durée avec une ou plusieurs valeurs seuils, dans lequel, en fonction de la comparaison et de l'information de type d'appareil et/ou
de logiciel, il est détecté si des erreurs ou des problèmes sont survenus lors du déverrouillage.

2. Procédé selon la revendication 1, dans lequel le premier signal de communication présente une information d'autorisation pour le déverrouillage du système d'accès (10),
dans lequel le dispositif de lecture (II) vérifie l'information d'autorisation avant et/ou comme partie de la décision de déverrouillage, de préférence dans lequel la décision de déverrouillage est prise à l'étape b) en tenant compte de l'information d'autorisation.

3. Procédé selon l'une des revendications précédentes, dans lequel l'information de type d'appareil et/ou de logiciel présente l'une des informations suivantes :
- une information, qui indique un type d'appareil du terminal mobile (20) ; et/ou
- une information, qui indique une version et/ou un type d'une application logicielle du terminal mobile (20), dans lequel l'application logicielle est utilisée par le terminal mobile (20) pour le déverrouillage du système d'accès (10) ; et/ou
- une information, qui indique une version et/ou un type d'un système d'exploitation du terminal mobile (20).

4. Procédé selon l'une des revendications précédentes, dans lequel, en tant que partie de la détection d'erreurs dans l'étape c) il est détecté,
si des erreurs et/ou des problèmes sont présents lors du déverrouillage du système d'accès (10) pour :
- le type d'appareil du terminal mobile (20) ; et/ou
- la version et/ou le type de l'application logicielle du terminal mobile (20) ; et/ou
- la version et/ou le type du système d'exploitation du terminal mobile (20) ; et/ou
- une version et/ou un type d'un logiciel du dispositif de lecture (11) et/ou du système d'accès (10).

5. Procédé selon l'une des revendications précédentes, dans lequel le procédé comprend en outre :
--- d) détection - par le dispositif de lecture (II) - d'un nombre d'autres tentatives de déverrouillage et/ou d'autres premiers signaux de communication, que le dispositif de lecture (II) reçoit, de préférence du terminal mobile (20), dans une seconde période de temps pouvant être établie, commençant au premier moment,
dans lequel la détection d'erreurs dans l'étape c) est réalisée en outre en tenant compte du nombre d'autres tentatives de déverrouillage reçues et/ou d'autres premiers signaux de communication reçus.

6. Procédé selon l'une des revendications précédentes,
dans lequel la détection d'erreurs dans l'étape c) est réalisée par un système de serveur (100),
dans lequel, avant l'étape c), des informations sont transmises au système serveur (100), qui indiquent :
- la première durée, et
- l'information de type d'appareil et/ou de logiciel ; et
- en option, le nombre d'autres tentatives de déverrouillage reçues et/ou d'autres premiers signaux de communication reçus.

7. Procédé selon l'une des revendications précédentes, dans lequel, en fonction de la détection d'erreurs réalisée dans l'étape c) :
- une modification et/ou une mise à jour de l'application logicielle du terminal mobile (20) est réalisée, dans lequel l'application logicielle est utilisée par le terminal mobile (20) pour le déverrouillage du système d'accès ; et/ou
- une modification et/ou une mise à jour du système d'exploitation du terminal mobile (20) est réalisée ; et/ou
- une modification et/ou une mise à jour du logiciel du dispositif de lecture (II) et/ou du système d'accès (10) est réalisée.

8. Procédé selon l'une des revendications précédentes, dans lequel, en fonction de la détection d'erreurs réalisée dans l'étape c), un message est transmis au terminal mobile (20), en particulier par le système de serveur (100),
-- dans lequel le message présente une information relative à une erreur et/ou un problème détecté(e) dans la détection d'erreurs dans l'étape c) ; ou
-- dans lequel le message présente une invitation ou une remarque :
- pour modifier et/ou mettre à jour l'application logicielle du terminal mobile (20), et/ou
- pour modifier et/ou mettre à jour le système d'exploitation du terminal mobile (20).

9. Procédé selon l'une des revendications précédentes,
dans lequel l'interface de communication (K) du dispositif de lecture (II) est conçue comme une interface de communication NFC, une interface de communication UWB ou une interface de communication BLE, dans lequel le premier signal de communication est de préférence un signal de communication NFC, un signal de communication UWB ou un signal de communication BLE.

10. Procédé selon l'une des revendications précédentes, dans lequel une notification de positionnement est transmise au terminal mobile (20) en fonction de la détection d'erreurs dans l'étape c), dans lequel la notification de positionnement présente une information et/ou une invitation dépendant du type de terminal pour le positionnement du terminal mobile (20) par rapport au dispositif de lecture (II), de préférence dans lequel l'information et/ou l'invitation dépendant du type de terminal pour le positionnement est notifiée à un utilisateur par l'intermédiaire d'un dispositif de restitution du terminal mobile (20).

11. Dispositif de lecture (II) pour un système d'accès (10) configuré pour mettre en œuvre un procédé selon l'une des revendications 1 à 10, dans lequel le dispositif de lecture (II) présente une interface de communication (K) pour la réception de signaux de communication d'un terminal mobile (20),
--- dans lequel le dispositif de lecture (II) est configuré pour la réception d'un premier signal de communication, concernant un déverrouillage du système d'accès (10), du terminal mobile (20) à un premier moment,
--- dans lequel le dispositif de lecture (II) est configuré pour la prise d'une décision de déverrouillage - à un second moment après le premier moment,
dans lequel le moyen de lecture (II) est configuré pour la détection et/ou la mesure une première durée entre le premier moment et le second moment, et dans lequel le dispositif de lecture est configuré pour la réalisation d'une détection d'erreurs comprenant une comparaison de la première durée avec une ou plusieurs valeurs seuils.

12. Système configuré pour mettre en œuvre un procédé selon l'une des revendications 1 à 10, dans lequel le système comprend un système d'accès (10) comportant un dispositif de lecture (II) et un système de serveur (100), dans lequel le dispositif de lecture (II) présente une interface de communication (K) pour la réception de signaux de communication d'un terminal mobile (20),
--- dans lequel le dispositif de lecture (II) est configuré pour la réception d'un premier signal de communication, concernant un déverrouillage du système d'accès (10), du terminal mobile (20) à un premier moment,
--- dans lequel le dispositif de lecture (II) est configuré pour la prise d'une décision de déverrouillage - à un second moment après le premier moment,
dans lequel le dispositif de lecture (II) est configuré pour détecter et/ou mesurer une première durée entre le premier moment et le second moment,
--- dans lequel le système de serveur (10) est configuré pour la réalisation d'une détection d'erreurs en fonction de la première durée.

13. Produit programme d'ordinateur comprenant des instructions qui, lorsqu'elles sont mises en œuvre par un dispositif de lecture selon la revendication 11 et/ou un système selon la revendication 12, lui font réaliser un procédé selon l'une des revendications 1 à 10.
